# EUROPÄISCHE PATENTANMELDUNG

(11) **EP 2 849 101 A1**
(43) Veröffentlichungstag der Anmeldung: **18.03.2015**
(21) Anmeldenummer: 14450041.0
(22) Anmeldetag: 01.09.2014
(51) Int. Cl.: G06F 17/50, G06Q 10/06

(54) **Verfahren zum Planen und Errichten von Gebäuden**

(30) Priorität: 12.09.2013 AT 7082013
(71) Anmelder: Ari Griffner Patentholding KG, 9421 Eltweg (AT)
(72) Erfinder: Griffner, Ari, 9421 Eitweg (AT)
(74) Vertreter: Beer & Partner Patentanwälte KG

(57) **Zusammenfassung**

Beim Planen und Errichten eines Gebäudes, insbesondere eines Wohnhauses, wird wie folgt vorgegangen:
- Auswählen einer Plattform (Struktur)für das Gebäude. Festlegung der Größe (small, medium, large). Dabei wird auch das Bausystem ausgewählt,
- Auswählen der Funktionen (Anzahl der Schlafzimmer, Raumaufteilung etc.),
- Auswählen von Fenstern in Kombination mit Dachformen,
- Einfügen von allenfalls vorgesehenen Anbaumodulen und Anbauten,
- Anpassen des so erstellten Grundkonzeptes des Gebäudes an die am Errichtungsort herrschenden Gegebenheiten und Vorschriften,
- Umsetzen des geplanten Gebäudes durch örtliche Bauträger und dgl.,
- Herstellen der Elemente des so geplanten Gebäudes,
- Liefern und Errichten des Gebäudes durch lokale Unternehmen/Professionisten.

## Beschreibung

Die Erfindung betrifft ein Verfahren zum Planen und Errichten von Gebäuden mit den Merkmalen des einleitenden Teils von Anspruch 1.

Beim Planen und Errichten von Gebäuden wird herkömmlicherweise so vorgegangen, dass am Anfang eine Skizze erstellt wird, welche die äußere Form und die Funktion des Gebäudes, beispielsweise eines Wohnhauses, bestimmt. Die Form und die Funktion müssen dann auf das ausgewählte Bausystem angepasst werden (statische Beschränkungen).

Nachteilig bei dieser bekannten Vorgehensweise ist es, dass die bekannte Vorgehensweise keine hohe Flexibilität beim Wählen der Funktion und der Form des Gebäudes (insbesondere eines Wohnhauses) erlaubt.

Auch wenn Gebäude, wie Häuser, insbesondere Eigenheime oder Wohnhäuser, unter Verwendung standardisierter Elemente geplant und errichtet werden, ist die Flexibilität hinsichtlich Form und Funktion des Gebäudes eingeschränkt.

Der Erfindung liegt die Aufgabe zugrunde, ein Verfahren der eingangs genannten Gattung vorzuschlagen, mit dem auch bei Verwendung standardisierter Elemente ein individuelles Gestalten von Gebäuden möglich ist.

Gelöst wird diese Aufgabe mit einem Verfahren, das die Merkmale von Anspruch 1 aufweist.

Bevorzugte und vorteilhafte Ausgestaltungen des Verfahrens der Erfindung sind Gegenstand der Unteransprüche.

Bei dem Planen und Errichten von Gebäuden nach dem erfindungsgemäßen Verfahren werden bevorzugt vier Kriterien beachtet, nämlich
1. Struktur (Statik),
2. Funktion (Grundriss mit Raumaufteilung und -anordnung),
3. Form (Design, äußere Form) und
4. Gestaltung der Oberfläche durch Auswahl der gewünschten Werkstoffe.

Mit dem erfindungsgemäßen Verfahren ist es möglich, der gewählten Funktion (im Wesentlichen die Raumaufteilung und -anordnung) des Gebäudes eine weitgehend beliebige Ausgestaltung (Design) zuzuordnen, ohne däss die Funktion beeinträchtigt ist.

Als Ausgangspunkt für das Planen eines Gebäudes dient die Auswahl der Struktur, die in Form einer aus mehreren Arten/Formen/Größen ausgewählten Plattform gestaltet ist. Die Plattformen, welche die Grundlage beim erfindungsgemäßen Verfahren darstellen, sind statisch ausgerichtet und erlauben es, auf unterschiedliche Grundstückformen Rücksicht zu nehmen. So ist beispielsweise eine längliche Plattform (Long-House-Plattform) besonders gut für schmale und längliche Grundstücke geeignet, wogegen beispielsweise die Split-Level-Plattform besonders gut für Hanggrundstücke geeignet ist.

Durch Wahl der Plattform und der verschiedenen Strukturen können die Plattformen an unterschiedliche Bauarten angepasst werden, da alle Bauteile, wie Außenwand, Innenwand, Decke, Dach und die Oberflächengestaltung nach den jeweilig gegebenen Erfordernissen und Wünschen des Bauherren gewählt werden können.

Die Struktur wird durch die tragenden Bauteile, wie Außenwände, Stützen, Unterzüge, Decke und Dach, bestimmt.

Diese Bauteile haben Parameter, zum Beispiel statische Eigenschaften, wie Spannweiten, Dimension, Höhen etc.

All diese Parameter sind in dem erfindungsgemäßen Verfahren angelegt und können verändert werden. Dadurch können sie auf ein anderes Bausystem angepasst und übertragen werden. Dies ist vorteilhaft: Dadurch wird es möglich, die gewählten Designs mit lokalen Bausystemen umzusetzen. Beispielsweise können die Struktur einerseits und die Bauteile des Gebäudes andererseits in einer (web-basierten) Datenbank gespeichert sein und aus der Datenbank ausgewählt und abgerufen werden.

Bei dem erfindungsgemäßen Verfahren gibt es für jede Plattform eine Standardfunktion (= Standardgrundriss). Dieser Standardgrundriss hat in der Regel drei Schlafzimmer (häufigster Bedarf bei Einfamilienhäusern). Darüber hinaus gibt es für jede Plattform Varianten mit zwei und vier Schlafzimmern (basierend auf ein und derselben Plattform). Weiters gibt es Standard-Plattformen mit Standard-Funktion (zwei und drei Schlafzimmer), in drei Größen (klein, mittel und groß). Klein = ca.135 m2 Wohnfläche, mittel = ca.150 m2 Wohnfläche und groß = ca.170 m2 Wohnfläche. Innerhalb der unterschiedlichen Größen verändert sich die Funktion nicht.

Weiters wird beim erfindungsgemäßen Planen des Gebäudes die Außenform aus vorgegebenen, beispielsweise in einer (web-basierten) Datenbank gespeicherten, Elementen gewählt, wobei beispielsweise Fensterausgestaltungen, Dachformen, Andockmodule und Anbauten vorgesehen sein können.

Der erste Schritt der Formgebung bildet beispielsweise eine Kombination aus Fenstern und Dachformen, wobei Kombinationsmöglichkeiten vorgegeben sein können, um den jeweiligen Ansprüchen und Stilrichtungen (klassisch, modern usw.) gerecht zu werden. Vorgegebene Kombinationsmöglichkeiten verhindern, dass beispielsweise moderne Fenster (Stahlrahmen und spezielle Größen) und deren spezielle Anordnung mit einem klassischen Gebäude mit einem Walm- oder Satteldach kombiniert werden.

Für die modernen Varianten der Gebäude (Wohnhäuser) sind vornehmlich Flach- und Pultdächer vorgesehen.

Im Allgemeinen gibt es drei Kategorien von Designs, nämlich klassisch, modern und modern/klassisch, wobei auch Kombinationsmöglichkeiten gegeben sind.

Bei der Formgebung durch Fenster und Dachvarianten wird auch auf die Größenänderungen in den beiden ersten Schritten eingegangen.

Dies bedeutet, dass die Fenster bei der Variante "groß" größer sind als bei der Variante "klein".

Als nächster Schritt beim Planen des Gebäudes können an das Gebäude Module angedockt werden, wobei es auch hier wieder einen, beispielsweise in einer Datenbank, gespeicherten Katalog von Modulen gibt, der für das jeweilige Haus passende Module enthält. Solche Module können Terrassen, Balkone, Eingangsüberdachungen, Nebengebäude, Spaliere, freistehende Spaliere, (freistehende) Rankgitter usw. sein.

Die Module sind den jeweiligen Stilrichtungen angepasst: Klassische und moderne Module unterscheiden sich durch: Art des Geländers, Design, Konstruktionsmaterial. Beispielsweise: Balkonmodul klassisch und modern.

Beispielsweise kann beim Planen und Errichten eines Gebäudes, wie nachstehend beispielhaft beschrieben, vorgegangen werden:
Die Tragkonstruktion des Hauses wird einheitlich gewählt. Z.B. nach "open space" (= EP 0 953 697 B1).

Diese grundsätzliche Tragkonstruktion (= Plattform) wird in Abhängigkeit von örtlichen Klimagegebenheiten und Bauvorschriften als Vorgaben angepasst. Die grundsätzliche Statik der Plattform ist überall gleich und wird durch die "Karosserie", also Wand, Decke und Dach (z.B. wie in EP 0 856 089 A und EP 1 317 587 A) nach den jeweils vorgegebenen Bedingungen und Kundenwünschen ergänzt.

Also gibt es beim erfindungsgemäßen Verfahren zwei Phasen:
- global und standardisiert und
- regional und individualisiert.

Regional erfolgt auch die Kundenberatung, die Fertigung, die Auslieferung und die Montage des Hauses (Eigenheim).

Lokal erfolgt das Umsetzen durch örtliche Unternehmern (Professionisten), die auf globales Know-how und Standards zurückgreifen können.

Vorgesehen sein kann eine web-basierte Datenbank, auf der Hausdesigns angeboten werden. Baufirmen und Fertighausanbieter setzen diese Designs für ihre Kunden µm.

Beim erfindungsgemäßen Verfahren gibt es zwei Phasen:
- global und standardisiert (Plattform (global Chassis), bestehend aus allen tragenden Bauteilen - da die Schwerkraft weltweit gleich ist) und
- regional und individualisiert.
   (Klima und Geschmack sind lokale Faktoren, deswegen kann die Wärmedämmung etc. sowie Stilelemente lokal umgesetzt werden).

Ablauf von Planung und Bau nach dem erfindungsgemäßen Verfahren am Beispiel eines Hauses:
1. Kunde wählt ein Haus aus einer Datenbank aus. Dies ist beispielsweise eine web-basierte Datenbank. Zugriff über ein Webportal. Haus, z.B. entsprechend "panel one" (= EP 0 856 089 B1, EP 1 317 587 B1) oder "open space" (= EP 0 953 697 B1). Wandheizung durch Heizung gemäß EP 1 497 506 B1. Dabei wird auf das zur Verfügung stehende Grundstück Rücksicht genommen, um Himmelsrichtung, Zufahrtmöglichkeit und dgl. zu beachten.
   Der Kunde wählt beispielsweise aus dem Web-Portal ein Haus aus. Durch eine dem Haus zugeordnete Identifikationsnummer ist das Haus für die mit dem lokalen Umsetzen befassten Unternehmer eindeutig zuordenbar. Durch Vereinbaren eines Termins mit dem örtlichen Unternehmer werden ausgewählte Häuser automatisch an den örtlichen Unternehmer weitergeleitet.
   In einem Beratungsgespräch kann der örtliche Unternehmer durch die ihm bekanntgegebene Identifikationsnummer die Konfiguration des Hauses nachvollziehen. In dem persönlichen Beratungsgespräch wird das Haus nach den Wünschen und Vorstellungen des Kunden unter Berücksichtigen der örtlichen Gegebenheiten konfiguriert.
2. Dann erfolgt das Festlegen der Struktur (Tragkonstruktion) = Plattform, aufgrund des vorher begutachteten Grundstückes. Die Geschosshöhe der jeweiligen Plattform ergibt sich einerseits aus den persönlichen Vorlieben des Kunden und andererseits aus Lage und Größe des Grundstückes. Die Konfiguration des Hauses erfolgt gemeinsam mit einem Berater als Hilfsperson. Die ausgewählte Struktur wird nun mit einer Funktion gefüllt (Größe, Anzahl der Zimmer, Art der Treppe, Treppenlage, Innentüre, Außentüren etc.). Im nächsten Schritt wird die Form definiert.
   Die Möglichkeiten, die dem Kunden zur Verfügung stehen und die Kombinationsmöglichkeiten sind in einer, insbesondere web-basierten, Datenbank gespeichert.
   Danach wird die Grundkonfiguration durch Wahl der Dachform (z.B. Satteldach, Walmdach, Flachdach, Pultdach) und weiters durch die Auswahl der Fenster nach Lage und Art aus einer Datenbank abgeschlossen. Die Form wird im ersten Schritt durch die Wahl der Anordnung der Fenster (symmetrische, asymmetrische, flächendeckende oder eckige Anordnung) gebildet. Zusätzlich können Dachflächenfenster integriert werden.
   Die Möglichkeiten, die dem Kunden zur Verfügung stehen und die Kombinationsmöglichkeiten sind in einer, insbesondere web-basierten, Datenbank gespeichert. Abschließend werden Zusatzmodule (Andockmodule, wie Terrasse, Balkone, Pergolen, Verandas, Nebengebäude, Eingangsüberdachungen, Rankgerüste (auch freistehende), Spaliere etc.) ausgewählt und an die Grundkonfiguration angedockt.
   Auf örtliche Gegebenheiten (Grundstückszufahrt) kann mittels Eingangsüberdachung und die sich daraus ergebene Lage eines Nebengebäudes (z.B. Garage) eingegangen werden. Die Form des Nebengebäudes wird bevorzugt an die Form des Gebäudes angeglichen, wenngleich z.B. unterschiedliche Dachformen und FEnsteranordnungen möglich sind.
3. Ein "Länderkonfigurator" passt das so gewählte Haus an die lokalen Gegebenheiten (Klima, Bauvorschriften) an.
4. Die Kosten werden in Echtzeit angegeben. Dies ist z.B. eine regionale Zentrale, die in Kontakt mit lokalen Partnern und Behörden steht.
5. Allenfalls noch offene Punkte betreffend das Haus werden vom Kunden gemeinsam mit einem Anbieter oder Architekt unter Verwenden eines Systemkonfigurators erledigt.
6. Kaufabschluss.
7. Umsetzung des geplanten Hauses erfolgt durch lokale Unternehmen (Bauträger, Statiker, Handwerker usw.) mit regionalen Baustoffen. Jeder Beteiligte (Gewerke: Elektriker, Installateur etc.) greift nur auf die ihn betreffenden Teile des Planes zu.
8. Alle am Planen und Errichten beteiligten Personen/Unternehmen arbeiten an ein und demselben Plan, der, wie zuvor beschrieben, erstellt worden ist.
9. Adaptieren des Plans an das gewünschte Bausystem und Herstellen des Hauses entsprechend dem so erstellten Plan. Die für die Fertigung relevanten Daten werden von der Datenbank bezogen.
10. Lieferung des Hauses und Errichten desselben durch lokale Unternehmen, Handwerker und Professionisten.

Nachstehend werden unter Bezugnahme auf die angeschlossenen Zeichnungen verschiedene Phasen beim Planen und Errichten eines Gebäudes beschrieben, wobei angenommen wird, dass das Planen des Gebäudes mit Zugriff auf eine web-basierte Datenbank erfolgt. Es zeigt:
- Fig. 1: schematisch grundlegende Schritte beim Planen und Errichten eines Gebäudes nach dem erfindungsgemäßen Verfahren,
- Fig. 2: verschiedene Strukturen für ein mit dem erfindungsgemäßen Verfahren planbares Gebäude,
- Fig. 3a,b und c: verschiedene Funktionen in verschiedenen Grundrissen (Strukturen) von erfindungsgemäß planbaren Gebäuden,
- Fig. 4: Strukturen erfindungsgemäß planbarer Gebäude,
- Fig. 5: am Beispiel von Schlafzimmern verschiedene Funktionen (Räume), die beim Planen eines Gebäudes aus einer Datenbank abgerufen werden können,
- Fig. 6: verschiedene Dachformen, Fensterformen, Anbaumodule und Nebengebäude, die aus einer Datenbank beim erfindungsgemäßen Planen eines Gebäudes abgerufen werden können,
- Fig. 7: ein Dialogfenster, in dem eine grundlegende Plattform dargestellt ist,
- Fig. 8: ein Dialogfenster, in dem Elemente enthalten sind, mit denen die Plattform gemäß Fig. 7 ergänzt werden kann,
- Fig. 9: schematisch, wie von einem Baumeister auf die Plattform zugegriffen werden kann,
- Fig. 10: ein Beispiel für ein im Web-Portal ersichtliches, erfindungsgemäß geplantes Gebäude mit Nebengebäude,
- Fig. 11: eine grundlegende Plattform,
- Fig. 12: eine Plattform, die mit Funktionen (Räumen) ausgefüllt ist,
- Fig. 13: ein Beispiel für eine Außenform des Gebäudes,
- Fig. 14: ein erfindungsgemäß geplantes Gebäude mit Andockmodul,

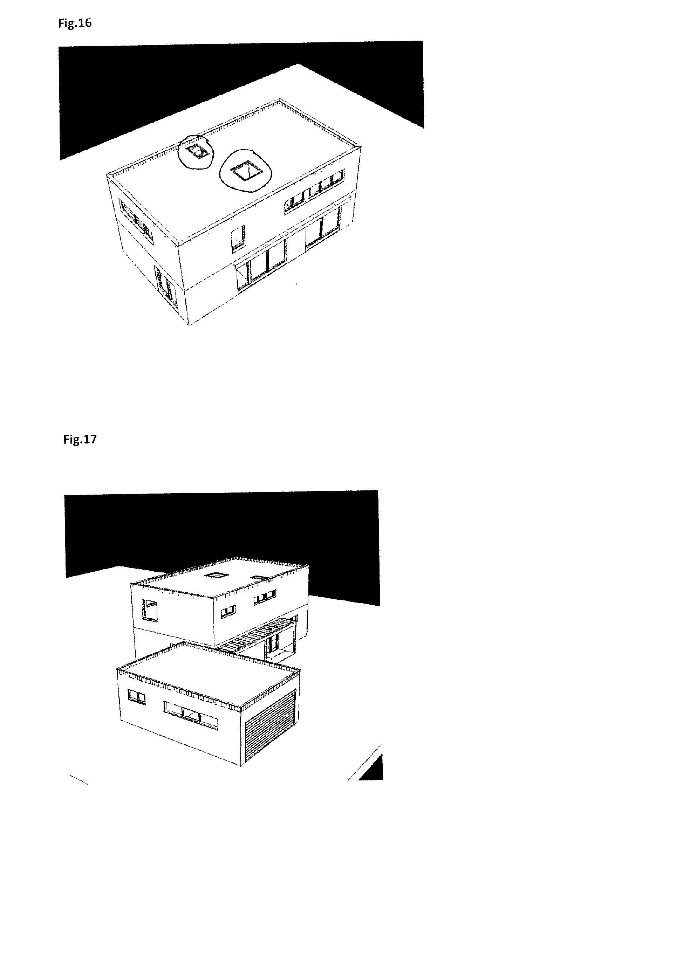

- Fig. 15 bis 17: erfindungsgemäß geplante Gebäude mit optional vorgesehenen Dachflächenfenstern und
- Fig. 18 bis 21: erfindungsgemäß geplante Gebäude mit erfindungsgemäß geplanten Nebengebäuden.

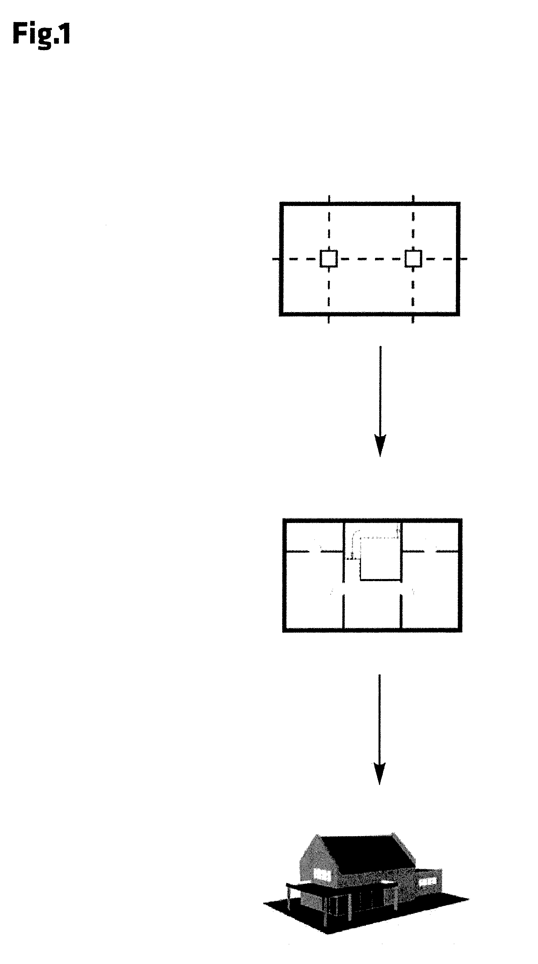

In Fig. 1 ist das Grundprinzip des erfindungsgemäßen Verfahrens zum Planen und Errichten von Gebäuden in drei Schritten wiedergegeben. Ausgehend von der in Fig. 1 oben gezeigten Plattform (Struktur) wird eine Raumaufteilung (Funktion) gewählt, wobei die Elemente für die Raumaufteilung aus einer web-basierten Datenbank abgerufen werden können. Im dritten Schritt (Form) wird das Design für das Haus, mit vordefinierten Fenstersets und Dachformen gebildet. Als nächster und abschließender Schritt der Planung wird das Gebäude in allen Einzelheiten fertig geplant und dann errichtet.

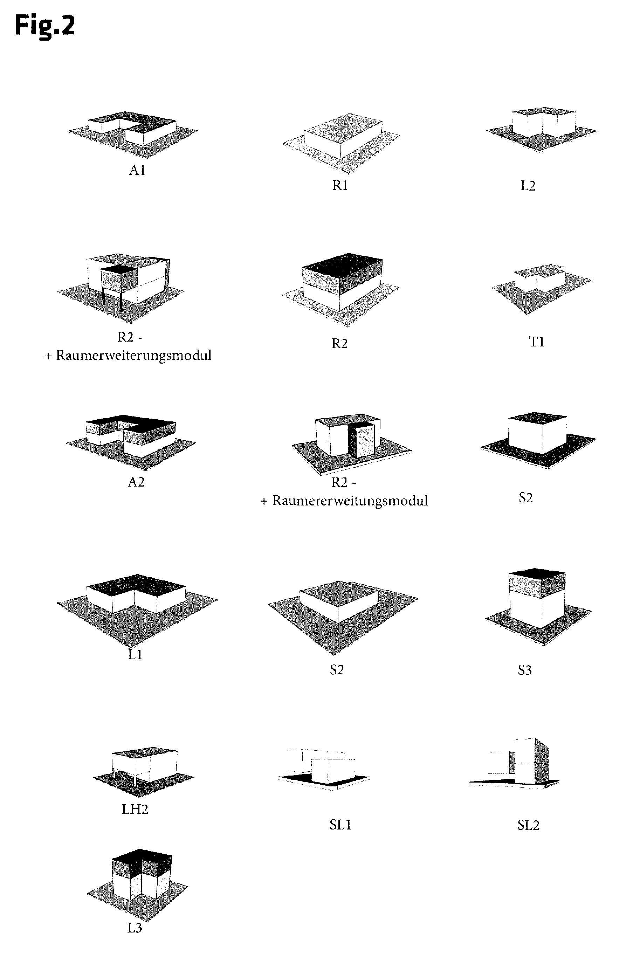

In Fig. 2 sind verschiedene Plattformen, nämlich rechteckig (R1, R2), quadratisch (S2, S3), Atrium (A1, A2), länglich (L2, L3), Habitat (H2, H3) und Plattformen mit unterschiedlichen Geschosshöhen (SL 1/1, SL 1/2) dargestellt. Alle Plattformen können ein- oder mehrgeschossig (ebenerdig, zweigeschossig oder dreigeschossig) ausgebildet sein. Diese Formen können ebenfalls aus einer web-basierten Datenbank abgerufen werden.

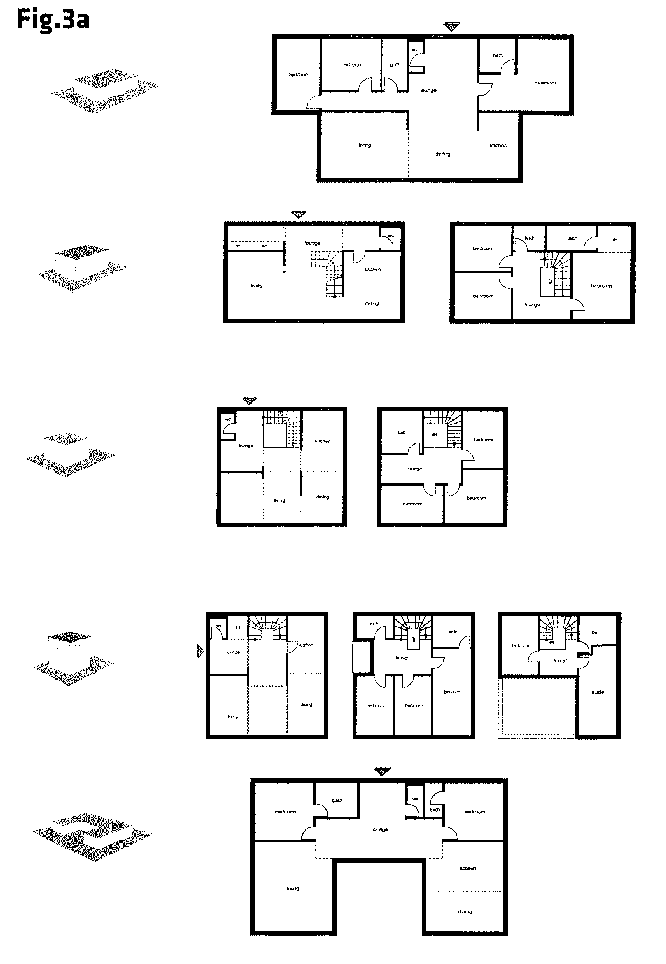

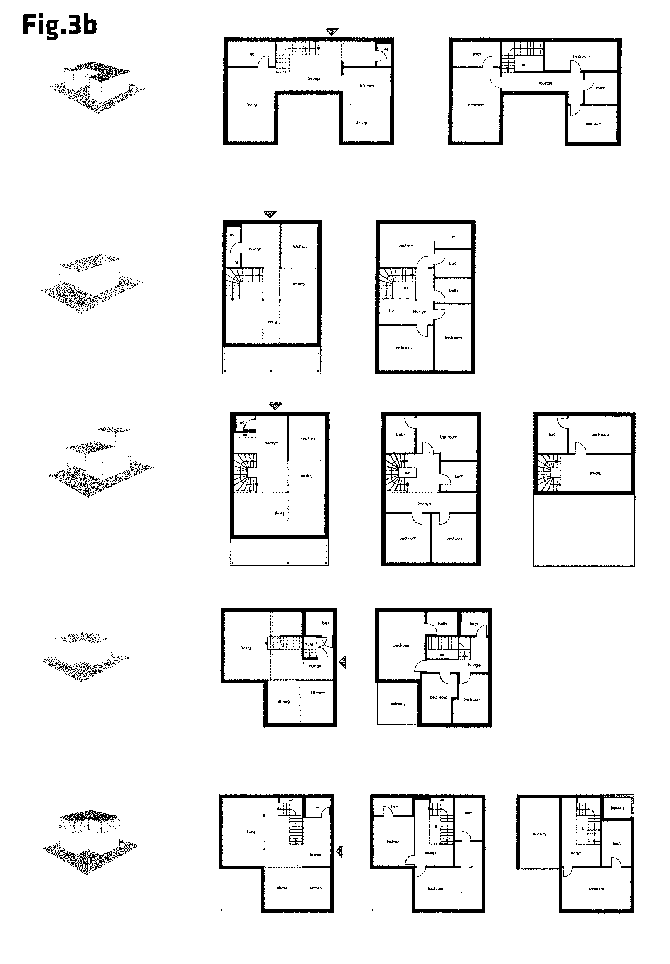

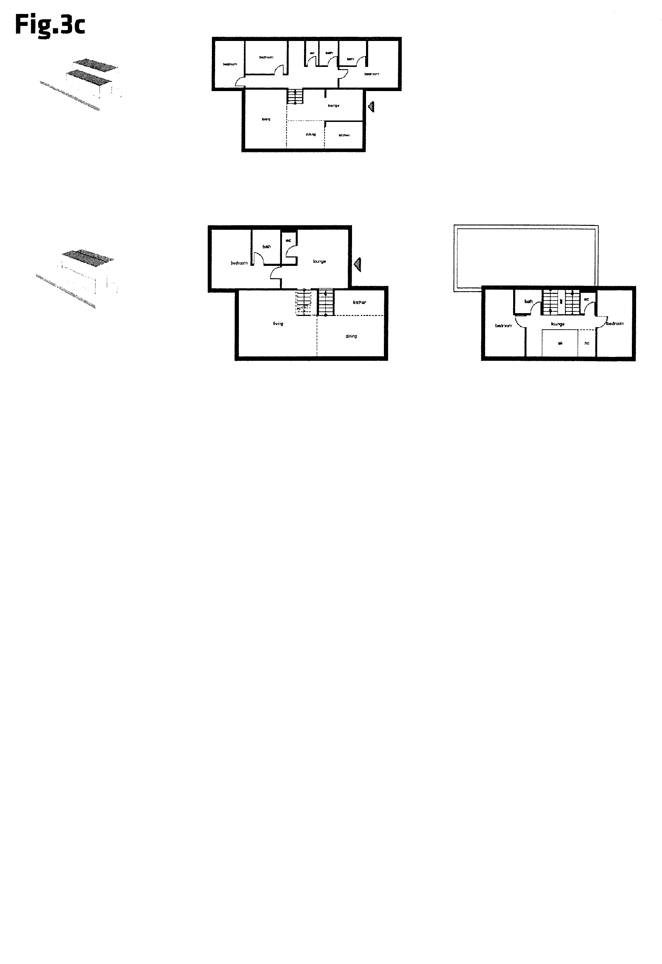

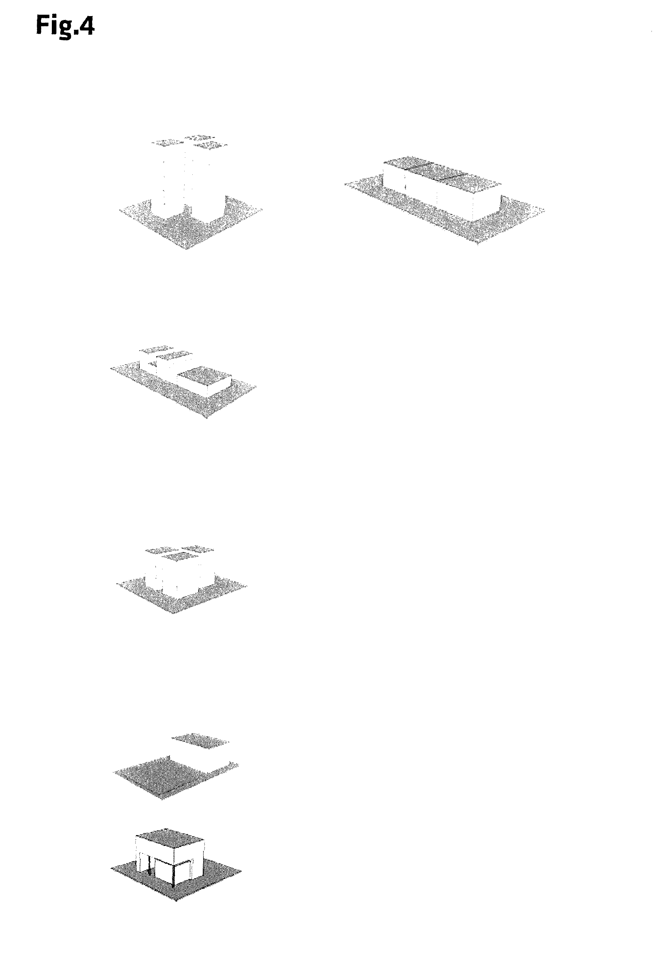

In den Fig. 3a, b und c sind verschiedene Raumaufteilungsmöglichkeiten (Funktionen), die in Plattformen gemäß Fig. 2 und 4 eingeplant werden können, dargestellt.

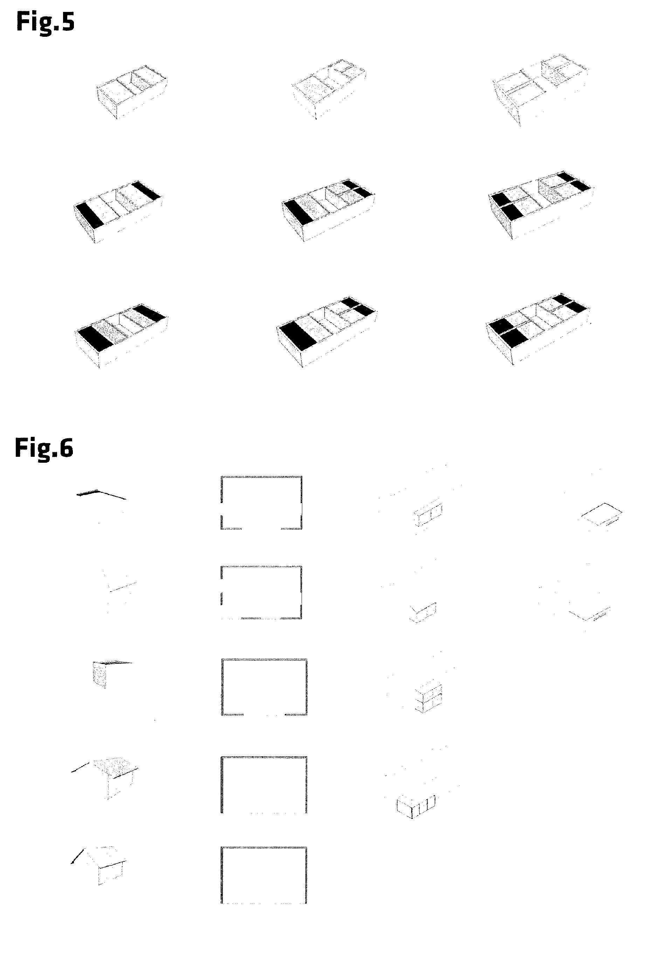

Fig. 5 zeigt am Beispiel von Schlafzimmern, welche "Funktionen" für das Planen eines Gebäudes im Bereich Raumaufteilung aufgerufen werden können.

In Fig. 5 ist beispielhaft gezeigt, wie beim Erstellen der Funktion des Gebäudes Räume ausgewählt und in den Planungsablauf integriert werden können. Dabei zeigt Fig. 5 beispielhaft verschiedene Formen von Schlafzimmern, wobei jeweils vorgegeben sind zwei Schlafzimmer, drei Schlafzimmer und vier Schlafzimmer und wobei zu jeder Gruppe Untergruppen klein, mittel und groß (S, M, L) vorgegeben sein können.

Fig. 6 zeigt in der einen (ersten) Spalte Dachformen, in der zweiten Spalte Fensterformen und -anordnungen, in der dritten Spalte Anbaumodule und in der vierten (letzten) Spalte Anbauten, die beim erfindungsgemäßen Planen eines Gebäudes berücksichtigt und verwendet werden können, indem sie an Plattformen angefügt (angedockt) werden.

Beispielsweise kann bei dem erfindungsgemäßen Verfahren wie folgt vorgegangen werden:
Zunächst wird die Tragkonstruktion (Plattform) des Hauses in einem Dummy-Bausystem angelegt. Dieses Dummy-Bausystem kann beispielsweise unter Verwendung von Wandelementen gemäß EP 0 856 089 A und EP 1 317 587 A gewählt werden, wobei die Tragkonstruktion gemäß EP 0 953 697 A ausgeführt sein kann.

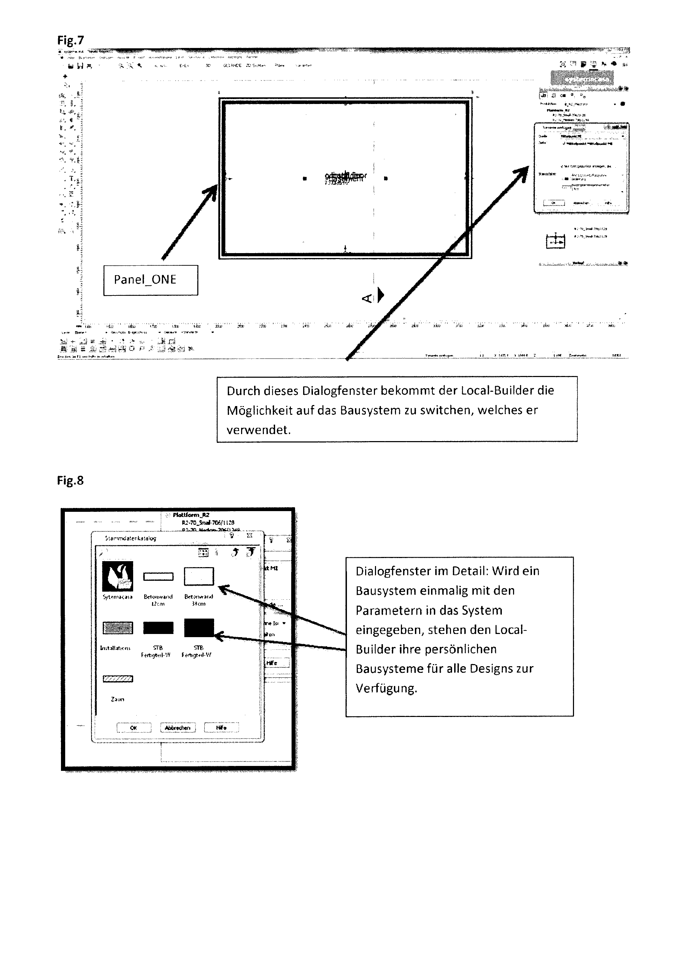

Durch das in Fig. 7 gezeigte und in Fig. 8 in vergrößertem Maßstab nochmal gezeigte Dialogfenster bekommt der Planer ("Local-Builder") die Möglichkeit, das Bausystem und zugehörige Elemente zu berücksichtigen, die er verwenden möchte.

In Fig. 8 ist gezeigt, dass im Dialogfenster nach der Auswahl des Bausystems, das in das Verfahren eingegeben wird, dem "Local-Builder" persönliche Bausysteme für alle Designs zur Verfügung gestellt sind.

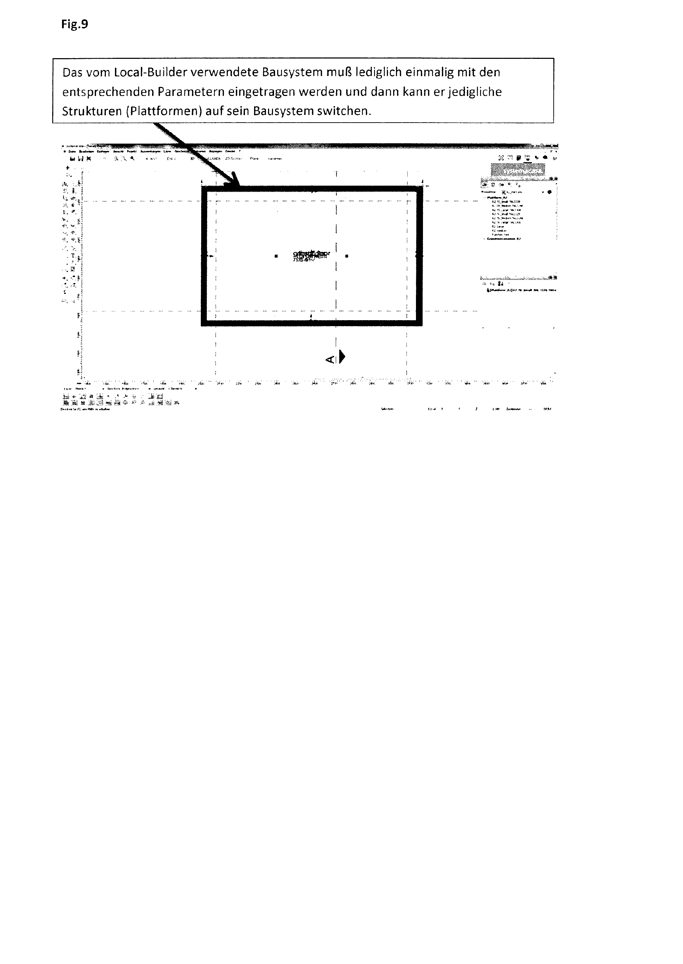

Dies bedeutet, dass, wie in Fig. 9 dargestellt, das von dem den Bau ausführenden Baumeister verwendete Bausystem lediglich einmal mit dem entsprechenden Parametern eingegeben werden muss, worauf dann jegliche Strukturen (Plattformen) auf das Bausystem angewendet werden können.

In der Praxis kann beim erfindungsgemäßen Planen und Errichten von Gebäuden wie folgt vorgegangen werden:
Der Kunde wählt ein Haus aus der Datenbank (Web-Portal) aus.
Durch eine dem Kunden zugeordnete Identifikationsnummer ist das gewählte Haus für einen örtlichen Bauträger, Professionisten usw. eindeutig zugeordnet.

Nach Beendigen des Auswahlprozesses vereinbart der Kunde einen Termin bei einem örtlichen Berater (Planer = "Local-Builder"), z.B. via Mail. In diesem Mail sind zusätzlich die Identifikationsnummern der vorausgewählten Häuser enthalten. Somit hat der Lokal-Builder die Möglichkeit sich auf den Termin vorzubereiten.

Als nächster Schritt kann der "Local-Builder" aufgrund der ihm zur Verfügung gestellten Identifikationsnummer die Konfiguration des Hauses nachvollziehen.

In einem persönlichen Beratungsgespräch wird die Planung fortgesetzt, indem der "Local-Builder" gemeinsam mit dem Kunden das Haus nach Vorstellung des Kunden und den örtlichen Gegebenheiten konfiguriert und gegebenenfalls angepasst.

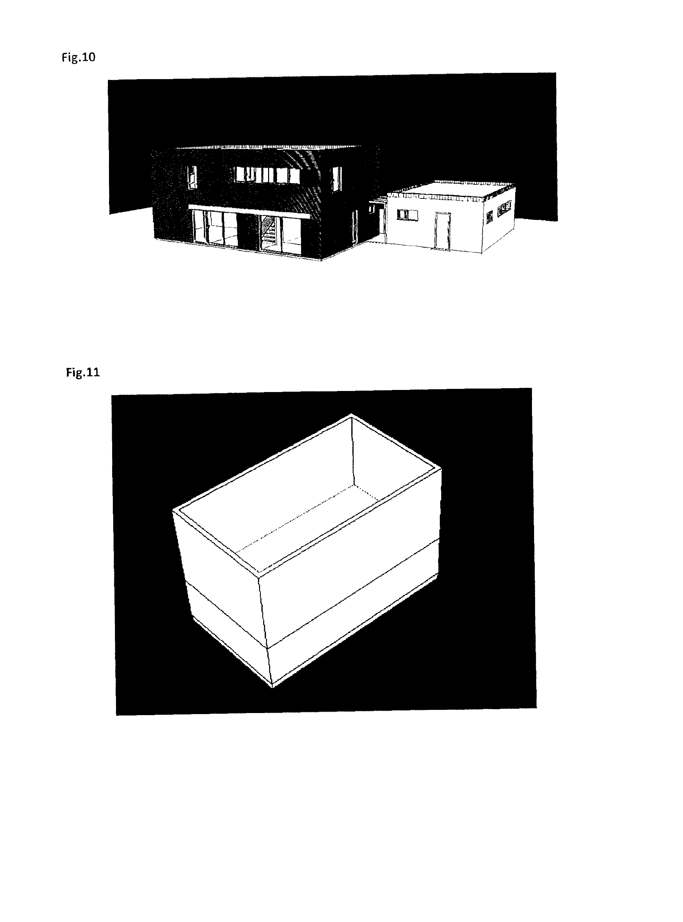

Wie in Fig. 11 dargestellt, ist der Ausgangspunkt für die Konfiguration die vorher gewählte Struktur (Plattform), wobei im in Fig. 11 gezeigten Beispiel die Plattform R2 ausgewählt worden ist (mögliche Plattformen sind beispielhaft in Fig. 2 dargestellt).

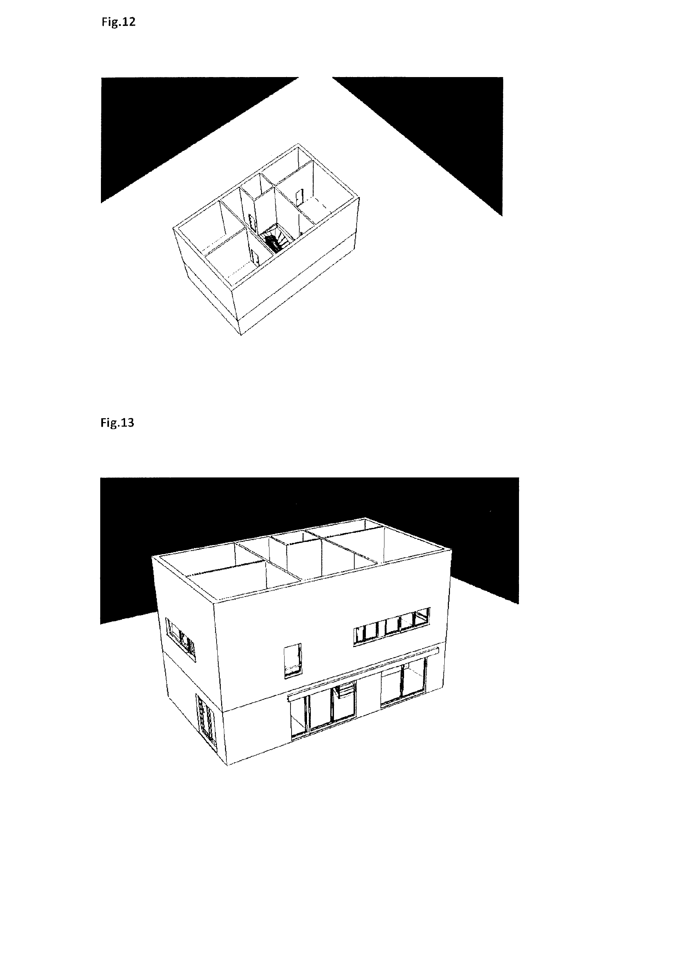

Als nächster Schritt wird die Struktur mit Funktionen (Raumaufteilung und -anordnung) gefüllt, wobei die Funktion folgende Elemente umfassen kann:
Grundriss (Anzahl und Aufteilung der Räume, Art der Treppe, Treppenanordnung, Innentüren, Außentüren usw.). Dies ist schematisch in Fig. 12 dargestellt.

Im nächsten Schritt der Planung wird die äußere Form des Hauses definiert, wobei im ersten Schritt die Form durch unterschiedliche Anordnung von Fenstern gebildet wird, wobei Fenster symmetrisch, asymmetrisch, mittig, flächendeckend oder über Eck angeordnet werden können (vgl. Fig. 6). Ein Beispiel einer Anordnung der Fenster ist in Fig. 13 gezeigt.

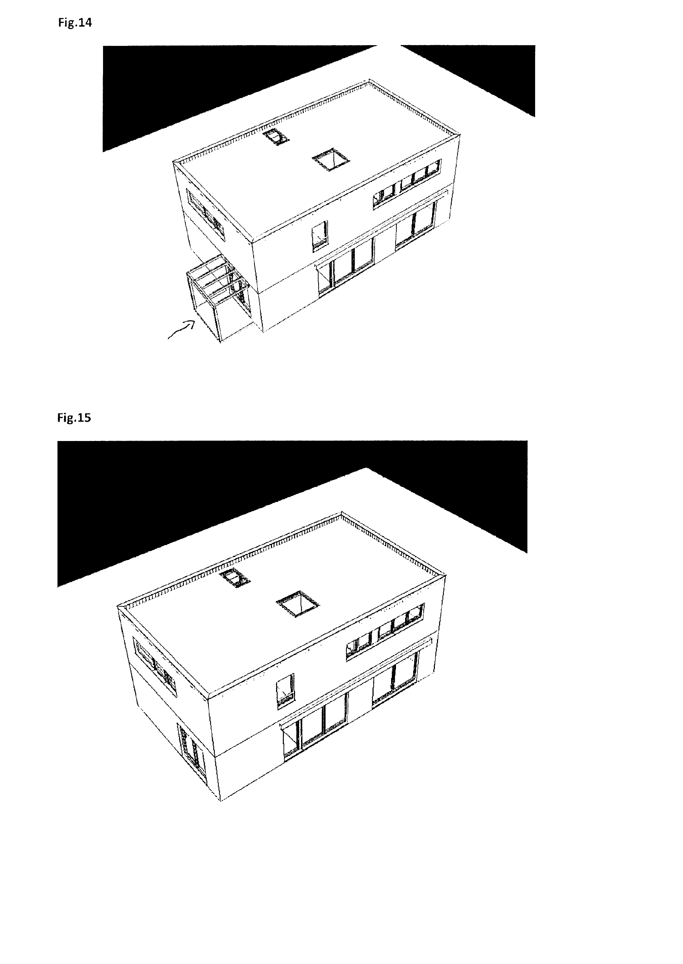

Als nächster Schritt (Fig. 14) der Formgebung wird das Dach ausgewählt, wobei die möglichen Dachformen, wie Satteldach, Walmdach, Flachdach und Pultdach ebenfalls aus einer (web-basierten) Datenbank ausgewählt werden können (Fig. 6). Dächer sind an die Vorauswahl der Fenster gekoppelt und vorgegeben (Damit wird verhindert, dass Dachformen und ausgewählte Fenster, die nicht zueinander passen, kombiniert werden).

Als nächster Schritt werden die vom Kunden gewünschten Andockmodule hinzugefügt, wobei auch hier mögliche Andockmodule aus einer Datenbank (vgl. Fig. 6) abgerufen werden können. Mögliche Andockmodule sind Terrassen, Balkone, Eingangsüberdachungen, Pergolen, Veranden, Rankgerüste, Spaliere, freistehende Rankgerüste, Andockmodule mit zusätzlichen Räumen und dgl. Beispiele hierfür sind in den Fig. 14 und 15 wiedergegeben.

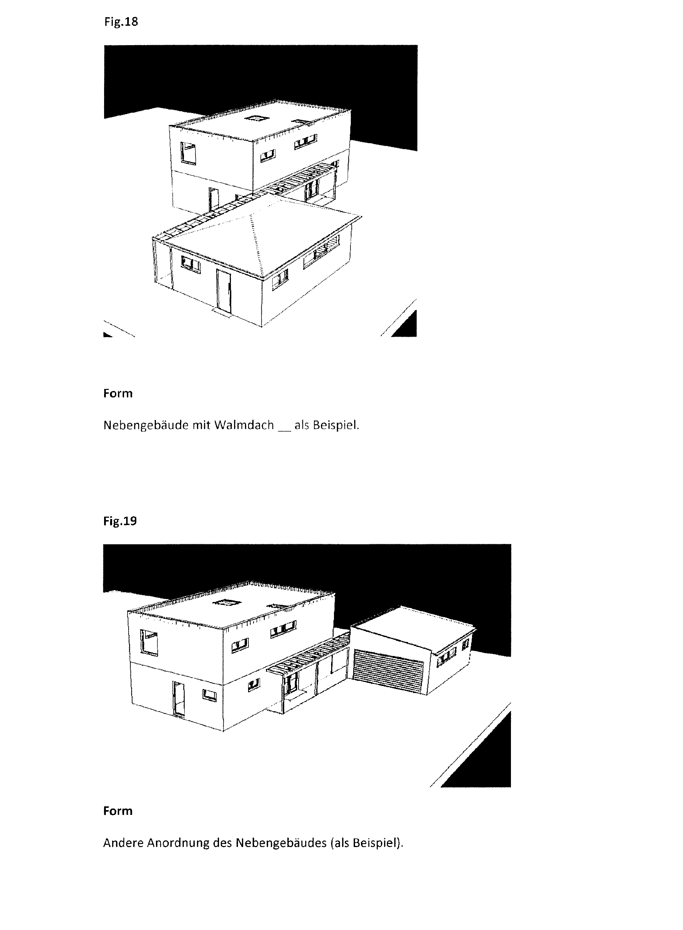

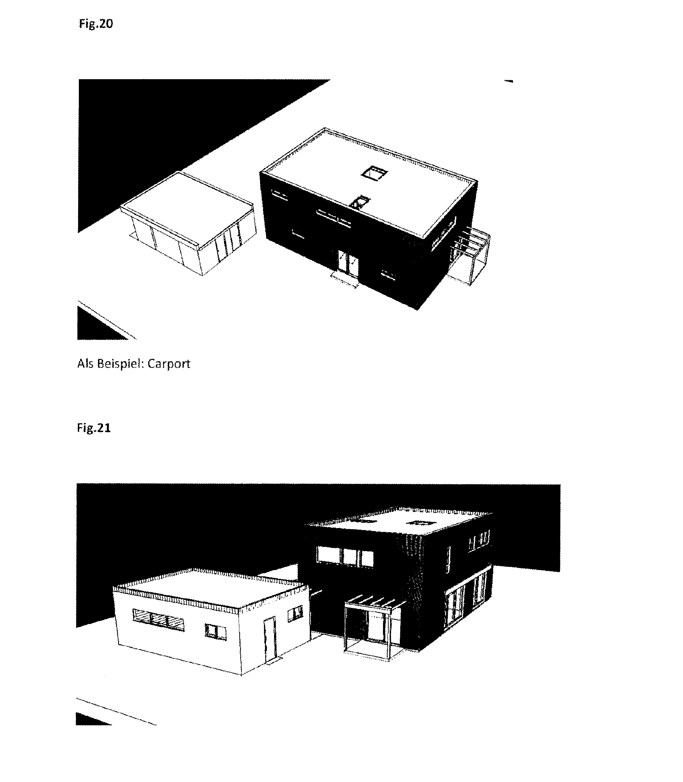

Des Weiteren kann bei der Bestimmung der Form auf örtliche Gegebenheiten des Grundstückes (Zufahrt und dgl.) mit Hilfe einer Eingangsüberdachung und daraus resultierender Lage von Nebengebäuden, wie Garage usw., eingegangen werden. Dabei kann die Form des Nebengebäudes an die Form des Hauptgebäudes angepasst werden, wobei aber auch unterschiedliche Fensteranordnungen und Dachformen des Nebengebäudes möglich sind (Fig. 18 bis Fig. 21).

Zusammenfassend kann ein Ausführungsbeispiel der Erfindung wie folgt beschrieben werden:
Beim Planen und Errichten eines Gebäudes, insbesondere eines Wohnhauses, wird wie folgt vorgegangen:
   - Auswählen einer Plattform (Struktur)für das Gebäude. Festlegung der Größe (small, medium, large). Dabei wird auch das Bausystem ausgewählt,
   - Auswählen der Funktionen (Anzahl der Schlafzimmer, Raumaufteilung etc.),
   - Auswählen von Fenstern in Kombination mit Dachformen,
   - Einfügen von allenfalls vorgesehenen Anbaumodulen und Anbauten,
   - Anpassen des so erstellten Grundkonzeptes des Gebäudes an die am Errichtungsort herrschenden Gegebenheiten und Vorschriften,
   - Umsetzen des geplanten Gebäudes durch örtliche Bauträger und dgl.,
   - Herstellen der Elemente des so geplanten Gebäudes,
   - Liefern und Errichten des Gebäudes durch lokale Unternehmen/Professionisten.

## Patentansprüche

1. Verfahren zum Planen und Errichten eines Gebäudes,
**gekennzeichnet durch** die Schritte:
- Auswählen einer Plattform für das Gebäude,
- Konfigurieren der Plattform des Gebäudes **durch** Einfügen der Funktion,
- Auswählen des Baustils und der Bauart,
- Auswählen von Fenstern in Kombination mit Dachformen,
- Anpassen des so erstellten Grundkonzeptes des Gebäudes an die am Errichtungsort herrschenden Gegebenheiten,
- Umsetzen des geplanten Gebäudes **durch** örtliche Bauträger und dgl.,
- Herstellen der Elemente des so geplanten Gebäudes,
- abschließende Lieferung und Errichtung des Gebäudes **durch** lokale Unternehmen/Professionisten.

2. Verfahren nach Anspruch 1, **dadurch gekennzeichnet, dass** die Elemente des zu planenden und errichtenden Gebäudes aus einer, insbesondere web-basierten, Datenbank abgerufen werden.

3. Verfahren nach Anspruch 1 oder 2, **dadurch gekennzeichnet, dass** als Funktion im Gebäude vorzusehende Räume, Fenster, Baustil, Baumaterial, Türen, Anbaumodule, Anbauten aus einer Datenbank abgerufen werden und in die ausgewählte Plattform integriert werden.

4. Verfahren nach einem der Ansprüche 1 bis 3, **dadurch gekennzeichnet, dass** dem zu planenden und errichtenden Gebäude am Beginn der Planungsphase eine Identifikationsnummer zugeordnet wird.

5. Verfahren nach einem der Ansprüche 1 bis 4, **dadurch gekennzeichnet, dass** entsprechend dem gewählten Baustil Kombinationen von Elementen des Gebäudes vorgegeben werden.

6. Verfahren nach einem der Ansprüche 1 bis 5, **dadurch gekennzeichnet, dass** ein Plan für das Errichten des Gebäudes erstellt wird, der allen am Errichten des Gebäudes Beteiligten zur Verfügung gestellt wird.

7. Verfahren nach einem der Ansprüche 1 bis 6, **dadurch gekennzeichnet, dass** die für das Errichten des Gebäudes relevanten Daten von einer Datenbank unter Verwendung der Identifikationsnummer abgerufen werden.
